# EUROPEAN PATENT APPLICATION

(11) **EP 3 993 544 A1**
(43) Date of publication of application: **04.05.2022**
(21) Application number: 19934888.9
(22) Date of filing: 27.06.2019
(51) Int. Cl.: H04W 72/12, H04W 16/14

(54) **COEXISTENCE INTERFERENCE REPORTING METHOD AND APPARATUS, MOBILE TERMINAL, AND STORAGE MEDIUM**

(71) Applicant: Beijing Xiaomi Mobile Software Co., Ltd., Beijing 100085 (CN)
(72) Inventor: JIANG, Xiaowei, Beijing 100085 (CN)
(74) Representative: dompatent von Kreisler Selting Werner - Partnerschaft von Patent- und Rechtsanwälten mbB
(86) International application number: PCT/CN2019/093401
(87) International publication number: WO 2020/258193

(57) **Abstract**

Disclosed in the embodiments of the present application is a coexistence interference reporting method, comprising : a terminal reports a time division multiplexing (TDM) pattern according to coexistence interference, wherein the TDM pattern is used for indicating a time domain resource that can be used by a communication module applying interference or subjected to interference in the terminal; or the TDM pattern is used for indicating the time domain resource that cannot be used by the communication module applying interference or subjected to interference in the terminal; or the TDM pattern is used for indicating the transmission direction of an OFDM symbol, and the transmission direction comprises uplink transmission and/or downlink reception.

## Description

### TECHNICAL FIELD

The present disclosure relates to, but is not limited to, the field of wireless communications, and in particular to a coexistence interference reporting method and apparatus, a mobile terminal, and a storage medium.

### BACKGROUND

Since a long term evolution (LTE) module, a wireless fidelity (WiFi) module, a Bluetooth module, and a global navigation satellite system (GNSS) module exist in a device, frequency bands used by these modules in a communication process may interfere with each other. This kind of interference between different communication modules in the device is referred as to device coexistence interference, or simply referred as to coexistence interference. Such coexistence interference may cause poor communication quality of one or more communication modules, and as a result, the communication modules fail to receive signals correctly, and normal operation may be affected.

### SUMMARY

Embodiments of the present disclosure provide a coexistence interference reporting method and apparatus, a mobile terminal, and a storage medium.

According to a first aspect of the embodiments of the present disclosure, there is provided a coexistence interference reporting method, including:
reporting, by a terminal, a time division multiplexing (TDM) pattern according to coexistence interference, wherein the TDM pattern is used to indicate a time domain resource that is available for a communication module imposing interference or subjected to the interference in the terminal; or the TDM pattern is used to indicate the time domain resource that is not available for the communication module imposing the interference or subjected to the interference in the terminal; or the TDM pattern is used to indicate a transmission direction of an orthogonal frequency division multiplexing (OFDM) symbol, and wherein the transmission direction includes uplink transmission and/or downlink reception.

According to a second aspect of the embodiments of the present disclosure, there is provided a coexistence interference reporting apparatus, including:
a reporting module, configured to report a time division multiplexing (TDM) pattern according to coexistence interference by a terminal, wherein the TDM pattern is used to indicate a time domain resource that is available for a communication module imposing interference or subjected to the interference in the terminal; or the TDM pattern is used to indicate the time domain resource that is not available for the communication module imposing the interference or subjected to the interference in the terminal; or the TDM pattern is used to indicate a transmission direction of an orthogonal frequency division multiplexing OFDM symbol, and wherein the transmission direction includes uplink transmission and/or downlink reception, and the time domain resource is the OFDM symbol or a slot.

According to a third aspect of the embodiments of the present disclosure, there is provided a communication device, including:
an antenna;
a memory; and
a processor, respectively connected to the antenna and the memory, and configured to control the antenna to send and receive a wireless signal, and execute steps of the coexistence interference reporting method describe above by executing an executable program stored in the memory.

According to a fourth aspect of the embodiments of the present disclosure, there is provided a non-transitory computer-readable storage medium storing an executable program, wherein the executable program, when executed by a processor, implements steps of the coexistence interference reporting method describe above.

In the coexistence interference reporting method provided by the embodiments of the present disclosure, when the coexistence interference is detected or predicted, the TDM pattern is reported, and the TDM pattern is at a slot resource granularity and/or an OFDM symbol resource granularity. In this way, compared with a TDM pattern based on a hybrid automatic repeat request (HARQ) form, an inaccurate reporting of the coexistence interference due to a fixed HARQ pattern can be reduced, thereby improving accuracy of the coexistence interference reporting, improving effect of a base station processing the coexistence interference in the terminal based on an accurate TDM pattern and improving communication quality of the terminal.

### BRIEF DESCRIPTION OF THE DRAWINGS

FIG. 1 is a schematic structural diagram of a wireless communication system according to an embodiment of the present disclosure;
FIG. 2 is a schematic flowchart of a coexistence interference reporting method according to an embodiment of the present disclosure;
FIG. 3 is a schematic diagram of a TDM pattern according to an embodiment of the present disclosure;
FIG. 4 is a schematic diagram of a TDM pattern according to an embodiment of the present disclosure;
FIG. 5 is a schematic flowchart of a coexistence interference reporting method according to an embodiment of the present disclosure;
FIG. 6 is a schematic structural diagram of a coexistence interference reporting apparatus according to an embodiment of the present disclosure;
FIG. 7 is a schematic structural diagram of a coexistence interference reporting apparatus according to an embodiment of the present disclosure;
FIG. 8 is a schematic structural diagram of a terminal according to an embodiment of the present disclosure; and
FIG. 9 is a schematic structural diagram of a base station according to an embodiment of the present disclosure.

### DETAILED DESCRIPTION

A network architecture and service scenarios are described in embodiments of the present disclosure to more clearly explain the technical solutions of the embodiments of the present disclosure, but not constitute limitation on the technical solutions provided by the embodiments of the present disclosure. Those of ordinary skill in the art may understand that with the evolution of the network architecture and appearance of new service scenarios, the technical solutions provided by the embodiments of the present disclosure are also applicable to similar technical problems.

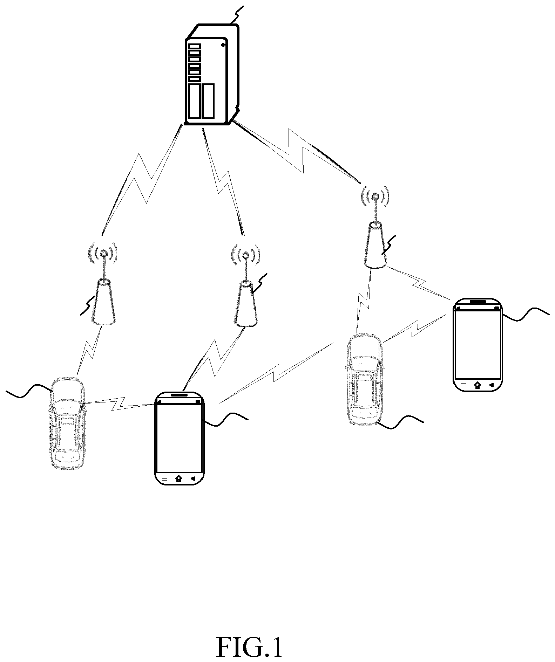

Reference is made to FIG. 1, which shows a schematic structural diagram of a wireless communication system according to an embodiment of the present disclosure. As illustrated in FIG. 1, the wireless communication system is a communication system based on a cellular mobile communication technology. The wireless communication system may include several terminals 110 and several base stations 120.

The terminal 110 may refer to a device that provides voice and/or data connectivity to a user. The terminal 110 may communicate with one or more core networks via a radio access network (RAN). The terminal 110 can be an Internet of Things terminal, such as a sensor device, a mobile phone (or a "cellular" phone) and a computer with the Internet of Things terminal. The terminal may be, for example, a fixed, portable, pocket-sized, handheld, built-in computer or vehicle-mounted device, such as a station (STA), a subscriber unit, a subscriber station, a mobile station, a mobile, a remote station, an access point, a remote terminal, an access terminal, a user terminal, a user agent, a user device, or a user equipment (UE). Or, the terminal 110 may also be a device of an unmanned aerial vehicle. Or, the terminal 110 may also be a vehicle-mounted device, such as a trip computer with a wireless communication function, or a wireless communication device connected to an external trip computer. Or, the terminal 110 may also be a roadside device, such as a streetlight, a signal light or another roadside device with a wireless communication function.

The base station 120 can be a network-side device in a wireless communication system. The wireless communication system can be a 4th generation mobile communication (4G) system, also known as a long-term evolution (LTE) system. Or, the wireless communication system may also be a 5G system, also known as a new radio (NR) system or a 5G NR system. Or, the wireless communication system may also be a next-generation system of 5G system. An access network in the 5G system can be referred to as a new generation-radio access network (NG-RAN).

The base station 120 can be an evolved NodeB (eNB) in the 4G system. Or, the base station 120 may also be a gNB with a central distributed architecture in the 5G system. When the base station 120 adopts the central distributed architecture, it usually includes a central unit (CU) and at least two distributed units (DUs). The CU is provided with a protocol stack of a packet data convergence protocol (PDCP) layer, a radio link control (RLC) layer, and a media access control (MAC) layer. The DU is provided with a protocol stack of a physical (PHY) layer. A specific implementation of the base station 120 is not limited in the embodiments of the present disclosure.

A wireless connection can be established between the base station 120 and the terminal 110 through a wireless air interface. In different implementations, the wireless air interface is a wireless air interface based on a 4th generation mobile communication network technology (4G) standard. Or, the wireless air interface is a wireless air interface based on a 5th generation mobile communication network technology (5G) standard, such as an NR. Or, the wireless air interface may also be a wireless air interface based on a 5G next-generation mobile communication network technology standard.

In some embodiments, an end to end (E2E) connection may also be established between the terminals 110, such as a vehicle to vehicle (V2V) communication, a vehicle to infrastructure (V2I) communication and a vehicle to pedestrian (V2P) communication in a vehicle to everything (V2X) communication, and other scenarios.

In some embodiments, the above wireless communication system may further include a network management device 130.

The several base stations 120 are connected to the network management device 130, respectively. The network management device 130 can be the core network device in the wireless communication system. For example, the network management device 130 can be a mobility management entity (MME) in an evolved packet core (EPC) network. Or, the network management device may also be another core network device, such as a serving gateway (SGW), a public data network gateway (PGW), a policy and charging rules function (PCRF) unit or a home subscriber server (HSS). An implementation form of the network management device 130 is not limited in the embodiments of the present disclosure.

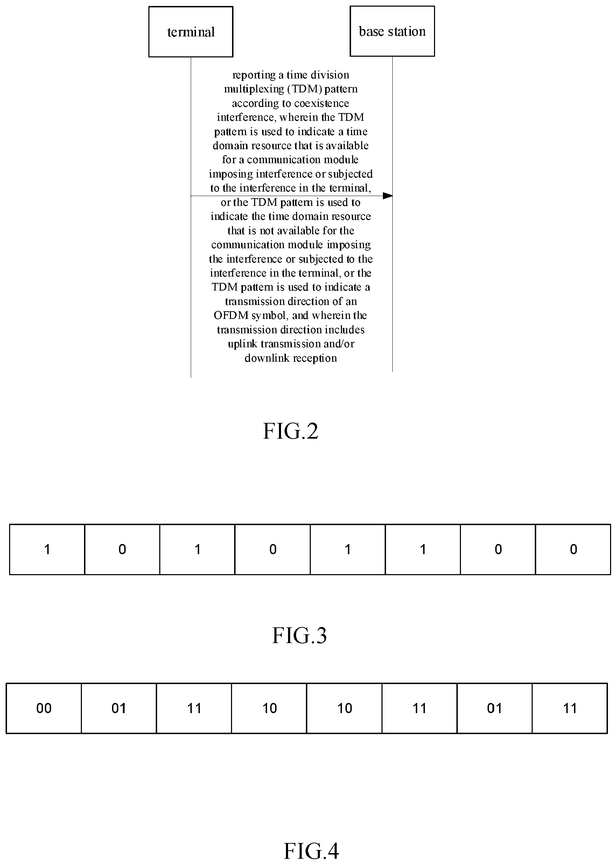

As shown in FIG. 2, the embodiments of the present disclosure provide a coexistence interference reporting method, including:
reporting a time division multiplexing (TDM) pattern according to coexistence interference; the TDM pattern is used to indicate a time domain resource that is available for (or can be used by) a communication module imposing interference or subjected to the interference in a terminal; or the TDM pattern is used to indicate the time domain resource that is not available for (or cannot be used by) the communication module imposing the interference or subjected to the interference in the terminal; or the TDM pattern is used to indicate a transmission direction of an OFDM symbol; the transmission direction includes uplink transmission and/or downlink reception.

In the present disclosure, "available (or can be used)" means that data transmission on this frequency domain resource may not cause the coexistence interference to other communication modules; conversely, "not available (or cannot be used)" means that the data transmission on this frequency domain resource may cause the coexistence interference to other communication modules.

In some embodiments, the coexistence interference may be currently detected or predicted; and
the time domain resource is an orthogonal frequency division multiplexing (OFDM) symbol or a slot. Note that, the time domain resource is not limited to the OFDM symbol or the slot.

The coexistence interference reporting method can be applied to the terminal. The terminal includes a plurality of communication modules, and these communication modules may be modules that use different communication standards for communication, for example, a LTE module, a Bluetooth module, a WiFi module, a navigation system communication module, and so on.

Since communication frequency bands used by these communication modules are the same or similar in frequency, there may be mutual interference when these communication modules simultaneously perform the communication.

Therefore, in some embodiments, the terminal can determine whether there is the coexistence interference currently based on its own communication condition. Alternatively, the terminal can predict whether the coexistence interference is about to occur based on its own communication requirements or a communication service that is about to start and the communication frequency band currently used by each communication module.

In a case where the terminal has detected or predicted the coexistence interference, the terminal may report its own TDM pattern, and the TDM pattern is a pattern that the terminal has frequency interference in the time domain.

The TDM pattern can be used to separately indicate whether each of multiple time domain resources corresponding to the TDM pattern can be used, or it can be used to separately indicate a transmission direction of each of the multiple time domain resources corresponding to the TDM pattern that can be used for transmitting data.

In the embodiments of the present disclosure, the TDM pattern may include three types, which are respectively:
a first type: a TDM pattern that indicates the contained time domain resource can be used, for example, a TDM pattern of a time domain resource that can be used by an interfered communication module that is interfered by other communication modules, and/or a TDM pattern of a time domain resource that can be used by a communication module imposing the interference that interferes other communication modules.

For example, the TDM pattern corresponds to M time domain resources. The TDM pattern can be used to indicate that each of the M time domain resources can be used by the interfered communication module or the communication module imposing the interference. If a time domain resource can be used, it means that there is no coexistence interference when the interfered communication module or the communication module imposing the interference performs the data transmission on this time domain resource.

For example, if the interfered communication module transmits the data on N of the M time domain resources corresponding to the TDM pattern without the interference from other communication modules in the terminal, the TDM pattern may respectively indicate the N time domain resources can be used. If the interfered communication module uses these N time domain resources for the data transmission, it may not be interfered by other communication modules in the terminal, thereby improving the communication quality.

For another example, if the coexistence interference does not occur when the communication module imposing the interference transmits the data on S of the M time domain resources corresponding to the TDM pattern, the TDM pattern may respectively indicate that the S time domain resources can be used. If the communication module imposing the interference uses these S time domain resources for the data transmission, it may not interfere other communication modules and/or be interfered by other communication modules, thereby reducing the coexistence interference of different communication modules in the terminal.

A second type: a TDM pattern used to indicate that a time domain resource corresponding to the TDM pattern cannot be used by the interfered communication module or the communication module imposing the interference.

For example, the TDM pattern corresponds to M time domain resources. The TDM pattern may be used to indicate that each of the M time domain resources cannot be used by the interfered communication module or the communication module imposing the interference. If a time domain resource cannot be used, it means that there may be the coexistence interference when the interfered communication module or the communication module imposing the interference performs the data transmission on this time domain resource.

For example, if the interfered communication module is interfered by other communication modules in the terminal when transmitting the data on N of the M time domain resources corresponding to the TDM pattern, the TDM pattern may respectively indicate the N time domain resources cannot be used. If the interfered communication module does not use these N time domain resources for the data transmission, the interference from other communication modules can be avoided, thereby improving the communication quality.

For another example, if the coexistence interference occurs when the communication module imposing the interference transmits the data on S of the M time domain resources corresponding to the TDM pattern, the TDM pattern may respectively indicate that the S time domain resources cannot be used. If the communication module imposing the interference does not use these S time domain resources for the data transmission, it may not interfere other communication modules and/or be interfered by other communication modules, thereby reducing the coexistence interference of different communication modules in the terminal.

In some embodiments, the TDM pattern can indicate which time domain resources can be used by the interfered communication module or the communication module imposing the interference for the data transmission, and the time domain resources that are indicated to be unusable are equivalent to time domain resources where the coexistence interference exists.

In this way, a time domain resource in the TDM pattern that is not explicitly indicated to be unable to be transmitted can be considered as a time domain resource that can be used to transmit the data.

FIG. 3 schematically shows a TDM pattern including 8 time domain resources, where one square represents one time domain resource. In some embodiments, one bit may be used to indicate whether one time domain resource can be used by the interfered communication module or the communication module imposing the interference. For example, when a value of a bit is "0", it indicates that the corresponding time domain resource can be used, and when the value of the bit is "0", it indicates that the corresponding time domain resource cannot be used.

A third type: a TDM pattern that indicates a transmission direction of a time domain resource in which the data can be transmitted. The TDM pattern indicates the transmission direction of each time domain resource in which the data can be transmitted, which is equivalent to that a transmission direction that is not indicated is a direction in which the time domain resource has the coexistence interference. In this way, if the base station schedules the time domain resource according to the transmission direction in which the data can be transmitted as indicated in the TDM pattern when performing resource scheduling, conflicts can be reduced, thereby improving the communication quality. For example, the TDM pattern not only indicates the time domain resource that is interfered or imposes the interference, but also indicates the direction that is free of the interference through the transmission direction. In some cases, only the uplink transmission is interfered, but in other cases, only the downlink reception is interfered. In further cases, both the uplink transmission and the downlink reception are interfered.

For example, the TDM pattern indicates at least one of the following: the transmission direction of the time domain resource where both the uplink transmission and the downlink reception are not interfered is the uplink transmission and the downlink reception; the transmission direction of the time domain resource that is indicated that the uplink transmission is interfered is the downlink reception; the transmission direction of the time domain resource that is indicated that the downlink reception is interfered is the uplink transmission; and the transmission direction of the time domain resource where both the uplink transmission and the downlink reception are interfered is not indicated.

FIG. 4 shows a TDM pattern including 8 time domain resources, where one square represents one time domain resource, and the transmission direction of each time domain resource can be indicated by two bits. For example, "11" indicates that the transmission direction includes the uplink transmission and the downlink reception; "10" indicates that the transmission direction is the downlink reception; "01" indicates that the transmission direction is the uplink transmission; and "00" indicates that there is no transmission direction, that is, the uplink transmission and the downlink reception of the corresponding time domain resource have the coexistence interference, and cannot be used for transmission.

FIGS. 3 and 4 show two indication manners of the TDM pattern. There are many specific indication manners, which are not limited to examples shown in FIGS. 3 and 4.

In summary, when the terminal has detected or predicted the coexistence interference, it reports any one of the above-mentioned TDM patterns. In this way, the base station can learn the coexistence interference in the terminal through the TDM pattern, and can perform the resource scheduling for terminal communication according to the TDM pattern. For example, TDM resource scheduling and/or FDM resource scheduling are performed for the terminal communication to reduce the coexistence interference in the terminal and ensure the communication quality.

In some embodiments, when the coexistence interference is that at least one of a long term evolution (LTE) frequency band and a new radio (NR) frequency band is interfered, a transmission direction of a corresponding OFDM symbol is the uplink transmission, that is, the OFDM symbol cannot be used for the downlink reception;
or,
when the coexistence interference is that a WiFi frequency band, a Bluetooth frequency band or a global navigation satellite system frequency band is interfered, the transmission direction of the corresponding OFDM symbol is the downlink reception, that is, the OFDM symbol cannot be used for the uplink transmission.

In other embodiments, when the coexistence interference is that at least one of the long term evolution (LTE) frequency band and the new radio (NR) frequency band is interfered, a transmission direction of a corresponding slot is the uplink transmission;
or,
when the coexistence interference is that the WiFi frequency band, the Bluetooth frequency band or the global navigation satellite system frequency band is interfered, the transmission direction of the corresponding slot is the downlink reception.

If the LTE frequency band and/or the NR frequency band are interfered, it means that the LTE module and the NR module are interfered communication modules.

If the WiFi frequency band, the Bluetooth frequency band or the global navigation satellite system frequency band is interfered, it means that a communication module that uses the WiFi frequency band, the Bluetooth frequency band or the global navigation satellite system frequency band is interfered.

In some embodiments, the TDM pattern includes at least one of the following:

the TDM pattern is indicated with slot configuration information, and the slot configuration information is used to indicate the OFDM symbol for the uplink transmission and/or the OFDM symbol for the downlink reception, and/or to indicate a slot for the uplink transmission and/or a slot for the downlink reception;
or,
the TDM pattern is indicated with time division duplex (TDD) uplink-downlink configuration (TDD-UL-DL-Pattern) information.

In some embodiments, the slot configuration information is used to describe the TDM pattern. In this way, the reporting of the TDM pattern is achieved by reporting the slot configuration information. One slot can include multiple OFDM symbols, for example, one slot can include 7 OFDM symbols or 14 OFDM symbols. Note that, this is only an example, and the number of OFDM symbols corresponding to one slot can be specifically configured according to a service requirement.

The slot configuration information can indicate the OFDM symbol on which the interfered communication module or the communication module imposing the interference can perform the uplink transmission, and/or the OFDM symbol on which the interfered communication module or the communication module imposing the interference can perform the downlink reception.

The TDM pattern indicates the transmission direction of the OFDM symbol, and when the base station performs the resource scheduling, it only performs the resource scheduling for the data transmission in the transmission direction in which the data transmission is allowed. In this way, the resource scheduling for the data transmission in the transmission direction in which the data transmission is not allowed and the coexistence interference exists is reduced, and a phenomenon of poor reception quality due to the coexistence interference is also reduced.

In the embodiments of the present disclosure, the slot configuration information takes slot as the description unit, and transmission information of one or more slots is configured at a time. For example, the TDM pattern indicated by the slot configuration information includes transmission configurations of OFDM symbols in one or more slots. The transmission configuration indicates whether the corresponding OFDM symbol can perform the data transmission, or the transmission direction in which the data transmission can be performed. In other embodiments, the TDD uplink-downlink configuration information is used to indicate the TDM pattern. In the embodiments of the present disclosure, since indication signaling of the TDD uplink-downlink configuration information itself has a function of indicating uplink and downlink, the TDD uplink-downlink configuration information is multiplexed to indicate the TDM pattern without additionally setting new transmission signaling, which has a characteristic of strong compatibility with the prior art.

For example, the TDD uplink-downlink configuration information implements the indication of the TDM pattern through at least one of the following:
an uplink-downlink transmission period (dl-UL-TransmissionPeriodicity)
the number of downlink slots (nrofDownlinkSlots)
the number of downlink OFDM symbols (nrofDownlinkSymbols)
the number of uplink slots (nrofUplinkSlots)
the number of uplink OFDM symbols (nrofUplinkSymbol).

There are many kinds of messages or signaling indicating the above-mentioned TDM pattern, and two implementations are provided above. The foregoing two implementations both have the characteristics of simple implementation and strong compatibility with the prior art.

In some embodiments, a bitmap is used to indicate the TDM pattern.

In other embodiments, when available time domain resources are consecutively distributed, a starting position and a length of the consecutively distributed time domain resources are used to indicate the TDM pattern.

In still other embodiments, when the available time domain resources are not consecutively distributed, a starting position and a length of consecutively distributed time domain sub-resources of discretely distributed time domain resources are used to indicate the TDM pattern.

For example, one slot or one OFDM symbol in the TDM pattern corresponds to one bit, and the TDM pattern is indicated by the bitmap. For example, the TDM pattern corresponds to M slots or M transmission symbols, and M bits are used to indicate the TDM pattern. For example, the corresponding bit as a first value is used to indicate that the slot or the OFDM symbol corresponding to the bit can be used for transmission, and the corresponding bit as a second value is used to indicate that the slot or the OFDM symbol corresponding to the bit cannot be used for transmission. Here, the first value is different from the second value. For example, if the first value is "0", the second value is "1"; and if the first value is "1", the second value is "0".

In other embodiments, the value of the corresponding bit can be used to indicate the uplink transmission and the downlink reception. For example, the corresponding bit as the first value is used to indicate that the slot or the OFDM symbol corresponding to the bit can be used for the uplink transmission, and the corresponding bit as the second value is used to indicate that the slot or the OFDM symbol corresponding to the bit can be used for the downlink reception. Here, the first value is different from the second value. For example, if the first value is "0", the second value is "1"; and if the first value is "1", the second value is "0".

In short, the bitmap can be used to simply complete the indication of the TDM pattern in the embodiments of the present disclosure.

In some embodiments, if the time domain resources in the TDM pattern that can be used by the interfered communication module or the communication module imposing the interference for transmission are consecutively distributed, the starting position and the length of the consecutively distributed time domain resources may be indicated to further reduce signaling overhead.

In other embodiments, if the time domain resources in the TDM pattern that can be used by the interfered communication module or the communication module imposing the interference for communication are not consecutively distributed, the time domain resources corresponding to this TDM pattern are sub-divided by resource block to obtain the starting position and the length of the time domain sub-resources. For example, the time domain resources corresponding to one TDM pattern that can be used for transmission are divided into N consecutive parts. In the embodiments of the present disclosure, the starting positions and the lengths of the N consecutive parts are respectively indicated, and the indication of the entire TDM pattern is realized, which can also reduce the signaling overhead compared with a case where each time domain resource is indicate.

In the embodiments of the present disclosure, several optional solutions are provided from a data level of the specific indication of the TDM pattern, and from the aspect of reducing the signaling overhead, but the specific implementation is not limited to the foregoing solutions.

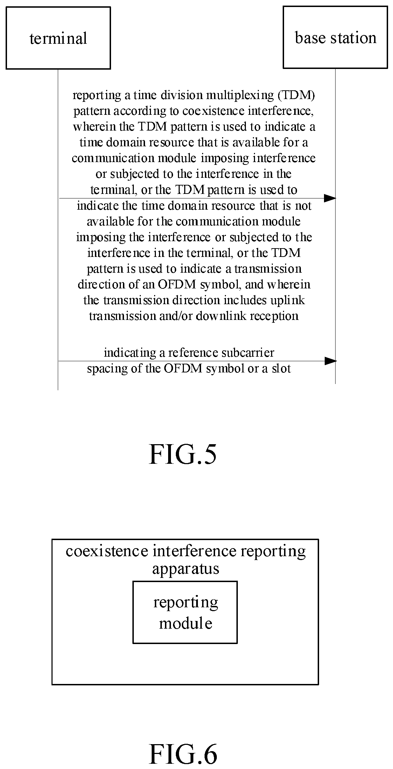

In some embodiments, as shown in FIG. 5, the method further includes:
indicating a reference subcarrier spacing of the OFDM symbol or the slot.

In some embodiments, the reference subcarrier spacing is related to a period of the OFDM symbol. Through the indication of the reference subcarrier spacing, it is equivalent to that the period of the OFDM symbol is reported. For example, the larger the reference subcarrier spacing, the smaller the period of the OFDM symbol. The smaller the reference subcarrier spacing, the larger the period of the OFDM symbol.

In the embodiments of the present disclosure, the TDM pattern may include multiple slots or multiple OFDM symbols. The periods of these OFDM symbols may be the same or different. If the periods of at least two OFDM symbols are the same, the reporting of the periods of the OFDM symbols is completed through the reporting of one reference subcarrier, which can further reduce the signaling overhead.

In some embodiments, the indicating the reference subcarrier spacing of the OFDM symbol or the slot includes:
using a bit length occupied by the TDM pattern to indicate the reference subcarrier spacing of the OFDM symbol or the slot, and different bit lengths correspond to different reference subcarrier spacings.

In some embodiments, the bit length occupied by one TDM pattern has a mapping relationship with the reference subcarrier spacing. In this way, the indication of the reference subcarrier spacing of the OFDM symbol or the slot is easily realized through the bit length occupied by the TDM pattern. This manner of indicating the reference subcarrier spacing can be an indirect indication manner. In addition, in the indirect indication manner, through the reporting of one TDM pattern, the indication of the TDM pattern and the reference subcarrier spacing is simultaneously completed, which reduces the number of information interactions between the terminal and the base station.

In some other embodiments, the reference subcarrier is directly indicated with a bit value of one or more bits.

In short, there are many manners to indicate the reference subcarrier of the slot or the OFDM symbol, which is not limited to any one of the foregoing manners.

In some embodiments, the indicating the reference subcarrier spacing of the OFDM symbol or the slot includes:

indicating an uplink reference subcarrier spacing and a downlink reference subcarrier spacing when frequency division multiplexing (FDD) is used.

If the FDD is used for a certain slot or OFDM symbol, the indication of the reference subcarrier spacing needs to indicate the uplink reference subcarrier spacing and the downlink reference subcarrier spacing respectively to distinguish period lengths of the uplink and downlink OFDM symbols.

In some embodiments, the indicating the reference subcarrier spacing of the OFDM symbol or the slot includes:
when there is a supplement uplink carrier, indicating a reference subcarrier spacing of the supplement uplink carrier and a reference subcarrier spacing of a non-supplement uplink carri er.

The supplement carrier is a carrier that a new frequency band is introduced in an original frequency band. For example, in 5G, the supplement uplink (SUL) carrier is subsequently introduced, and the supplement uplink carrier does not have the corresponding downlink carrier. For example, the SUL carrier may be a low-band carrier, and the new radio (NR) carrier is a highband carrier. The supplement uplink carrier is to enhance the uplink coverage, and the discussion has determined that the SUL carrier will not become a cell alone, but may be paired with the downlink carrier and belong to the cell corresponding to the downlink carrier. When a cell is configured with the SUL, the cell may have two uplink carriers, one is the SUL carrier and the other is the non-SUL carrier.

When the supplement uplink carrier is introduced in the communication between the terminal and the base station, the reference subcarrier spacing of the SUL and the reference subcarrier spacing of the non-supplement uplink carrier other than the SUL may be indicated respectively when the reference subcarrier spacing is indicated, which facilitate the base station to learn the period lengths of the OFDM symbols of the supplement uplink subcarrier and the non-supplement uplink carrier.

In some embodiments, the TDM patterns of different cells are indicated separately; or, the TDM patterns of different frequency points are indicated separately.

Some terminals are dual-connectivity terminals or multi-connectivity terminals, and these terminals can connect to different cells at the same time. In the embodiments of the present disclosure, the TDM patterns of different cells are indicated separately. In this way, each cell may receive its own TDM pattern, so that the base station knows the coexistence interference of the terminal in each cell to reduce the coexistence interference of the terminal in each connected cell through the resource rescheduling or the adjustment of the communication standard.

For example, the terminal is connected to a primary cell and a secondary cell, and the TDM patterns of the primary cell and the secondary cell are different.

For another example, the frequency point may be an absolute frequency value of the carrier that transmits the wireless signal. Different cells or carriers have different frequency points. In some embodiments, different frequency points may have different TDM patterns, so as to ensure that the terminal can reduce the coexistence interference based on the assistance of the base station at any frequency point, and further reduce the phenomenon of poor communication quality caused by the coexistence interference to improve the communication quality.

As shown in FIG. 6, the embodiments of the present disclosure provide a coexistence interference reporting apparatus, including:
a reporting module, configured to report a time division multiplexing (TDM) pattern according to coexistence interference, and the TDM pattern is used to indicate a time domain resource that is available for a communication module imposing interference or subjected to the interference in a terminal; or the TDM pattern is used to indicate the time domain resource that is not available for the communication module imposing the interference or subjected to the interference in the terminal; or the TDM pattern is used to indicate a transmission direction of an OFDM symbol, and the transmission direction includes uplink transmission and/or downlink reception, and the time domain resource is an orthogonal frequency division multiplexing (OFDM) symbol or a slot.

In some embodiments, the reporting module may be a program module, which, after executed by a processor, can implement the reporting of the above-mentioned TDM pattern.

In other embodiments, the reporting module may be a module formed by a combination of software and hardware, and the module formed by the combination of software and hardware may include various programmable arrays which include, but are not limited to: field programmable arrays or complex programmable arrays.

In still other embodiments, the reporting module may be a pure hardware module which includes, but is not limited to, an application specific integrated circuit.

In some embodiments, the coexistence interference reporting apparatus may further include a storage module that can store or cache the TDM pattern.

In some embodiments, when the coexistence interference is that at least one of a long term evolution (LTE) frequency band and a new radio (NR) frequency band is interfered, a transmission direction of a corresponding slot is the uplink transmission;
or,
when the coexistence interference is that a WiFi frequency band, a Bluetooth frequency band or a global navigation satellite system frequency band is interfered, the transmission direction of the corresponding slot is the downlink reception;
when the coexistence interference is that the at least one of the long term evolution (LTE) frequency band and the new radio (NR) frequency band is interfered, a transmission direction of a corresponding OFDM symbol is the uplink transmission;
or,
when the coexistence interference is that the WiFi frequency band, the Bluetooth frequency band or the global navigation satellite system frequency band is interfered, the transmission direction of the corresponding OFDM symbol is the downlink reception

In some embodiments, the TDM pattern includes at least one of the following:
the TDM pattern is indicated with slot configuration information, and the slot configuration information is used to indicate the OFDM symbol for the uplink transmission and/or the OFDM symbol for the downlink reception, and/or to indicate a slot for the uplink transmission and/or a slot for the downlink reception;
or,
the TDM pattern is indicated with time division duplex (TDD) uplink-downlink configuration information.

In some embodiments, the TDM pattern is indicated with a bitmap;
or,
when available time domain resources are consecutively distributed, the TDM pattern is indicated with a starting position and a length of the consecutively distributed time domain resources;
or,
when the available time domain resources are not consecutively distributed, the TDM pattern is indicated with a starting position and a length of consecutively distributed time domain sub-resources of discretely distributed time domain resources.

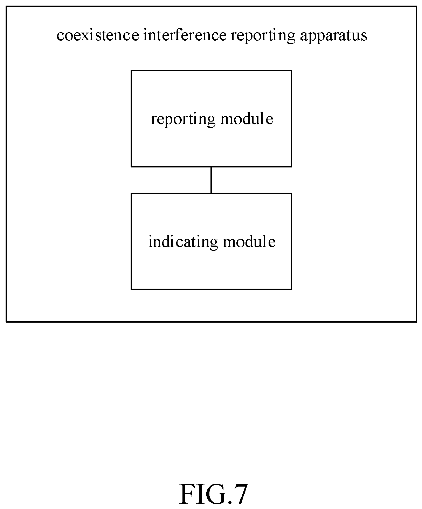

In some embodiments, as shown in FIG. 7, the apparatus further includes:
an indicating module, configured to indicate a reference subcarrier spacing of the OFDM symbol or the slot.

In some embodiments, the indicating module is configured to indicate the reference subcarrier spacing of the OFDM symbol or the slot with a bit length occupied by the TDM pattern, and different bit lengths correspond to different reference subcarrier spacings.

In some embodiments, the indicating module is configured to indicate an uplink reference subcarrier spacing and a downlink reference subcarrier spacing when frequency division multiplexing (FDD) is used.

In some embodiments, the indicating module is configured to, when there is a supplement uplink carrier, indicate a reference subcarrier spacing of the supplement uplink carrier and a reference subcarrier spacing of a non-supplement uplink carrier.

In some embodiments, TDM patterns of different cells are indicated separately;
or,
TDM patterns of different frequency points are indicated separately.

A specific example is provided below in conjunction with any of the foregoing embodiments:

### First Example

In a LTE communication system, the terminal reports the TDM pattern in the TDM solution.

The TDM pattern is used to prohibit sending and receiving data on certain HARQ channels; which sub-frames are not used is indicated, and the unused sub-frames need to conform to a HARQ pattern.

However, in a NR communication system, an uplink-downlink proportion is in units of OFDM symbol instead of sub-frame, and an uplink-downlink proportion mode and the HARQ pattern are no longer fixed, but can be changed according to scheduling. As a result, the previous TDM pattern is no longer applicable.

In view of this, the coexistence interference reporting method provided by this example includes:

the terminal has detected or predicted in-device coexistence interference and triggers reporting of the in-device coexistence interference; the TDM pattern is included in the reported content by the terminal, and the TDM pattern is used to indicate which OFDM symbols or slots among OFDM symbols or slots with a predetermined time period can be used, or indicate which OFDM symbols are used for the uplink transmission and which OFDM symbols are used for the downlink reception.

In some cases, the terminal indicates the reference subcarrier spacing while indicating the TDM pattern based on the OFDM symbol or the slot.

In some cases, in a case where the terminal indicates that a certain OFDM symbol cannot be used, if an interference direction is LTE or NR, it means that the OFDM symbol cannot be used for the downlink reception, but can be used for the uplink transmission; if the interference direction is another radio access type (RAT) (WiFi/ Bluetooth/GNSS), it means that the OFDM symbol cannot be used for the uplink transmission, but it can be used for the downlink reception; if the interference direction is bidirectional, it means that the OFDM symbol can neither be used for the uplink transmission nor for the downlink reception.

In some cases, the indicating the reference subcarrier spacing includes determining the reference subcarrier spacing based on a bit length corresponding to the TDM pattern, and different bit lengths correspond to different subcarrier spacings.

In some cases, the indicating the reference subcarrier spacing includes: for the FDD, indicating both the uplink reference subcarrier spacing and the downlink reference subcarrier spacing; or for the SUL, indicating the reference subcarrier spacings of both the SUL and non-SUL carriers.

In some cases, the indicating which OFDM symbols are used for the uplink transmission and which OFDM symbols are used for the downlink reception includes:

Manner 1: providing slot configuration information, which includes but is not limited to a slot configuration list; and the slot configuration list can be used to indicate which OFDM symbols in a slot are used for the downlink reception and which OFDM symbols in the slot are used for the uplink transmission.

Manner 2: providing one or more pieces of TDD-UL-DL-pattern configuration information, which can be used to indicate at least one of the following:

the dl-UL-TransmissionPeriodicity, the nrofDownlinkSlots, the nrofUplinkSlots and the nrofUplinkSymbols.

In some cases, the indicating which OFDM symbols can be used includes using a bitmap for indication or using a starting position and a length of available OFDM symbols for indication. If positions of the OFDM symbols that can be used are not consecutive, respective starting positions and lengths are provided separately.

In some cases, the indicating the TDM pattern may be performed per the serving cell or the frequency point separately.

The embodiments of the present disclosure also provide a communication device, including:
an antenna;
a memory; and
a processor, respectively connected to the antenna and the memory, and configured to control the antenna to send and receive a wireless signal, and execute steps of the coexistence interference reporting method provided by any of the foregoing embodiments by executing an executable program stored in the memory.

The communication device provided by the embodiments of the present disclosure may be the aforementioned terminal or base station. The terminal can be various human-borne terminals or vehicle-mounted terminals. The base station may be various types of base stations, for example, a 4G base station or a 5G base station.

The antenna may be various types of antennas, for example, a mobile antenna such as a 3G antenna, a 4G antenna, or a 5G antenna; the antenna may also include a WiFi antenna or a wireless charging antenna.

The memory may include various types of storage medium, and the storage medium is a non-transitory computer storage medium that can continue memorizing information stored thereon after the communication device is powered off.

The processor may be connected to the antenna and the memory through a bus or the like, and may be configured to read the executable program stored in the memory, for example, the coexistence interference reporting method shown by FIG. 2 and/or FIG. 5, etc..

The embodiments of the present disclosure also provide a non-transitory computer-readable storage medium storing an executable program, and the executable program, when executed by a processor, implements steps of the coexistence interference reporting method provided by any of the foregoing embodiments, for example, at least one of the methods shown in FIG. 2 and/or FIG. 5.

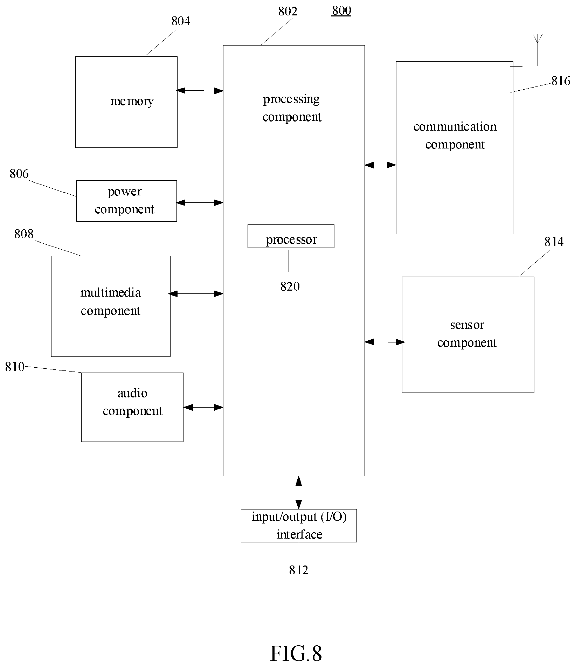

FIG. 8 shows a terminal according to an embodiment of the present disclosure. The terminal may be a mobile phone, a computer, a digital broadcasting terminal, a messaging device, a game console, a tablet device, a medical device, a fitness device, a personal digital assistant, etc..

Referring to FIG. 8, the terminal 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls the overall operations of the terminal 800, such as the operations associated with display, telephone calls, data communications, camera operations, and recording operations. The processing component 802 can include one or more processors 820 to execute instructions to perform all or part of the steps in the above described methods. Moreover, the processing component 802 can include one or more modules to facilitate the interaction between the processing component 802 and other components. For example, the processing component 802 can include a multimedia module to facilitate the interaction between the multimedia component 808 and the processing component 802.

The memory 804 is configured to store various types of data to support the operation of the terminal 800. Examples of such data include instructions for any application or method operated on the terminal 800, such as the contact data, the phone book data, messages, pictures, videos, and the like. The memory 804 can be implemented by any type of volatile or nonvolatile storage device, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power to various components of the terminal 800. The power component 806 can include a power management system, one or more power sources, and other components associated with the generation, management, and distribution of power in the terminal 800.

The multimedia component 808 includes a screen providing an output interface between the terminal 800 and the user. In some embodiments, the screen can include a liquid crystal display (LCD) and a touch panel (TP). If the screen includes the touch panel, the screen can be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 808 includes a front camera and/or a rear camera. When the terminal 800 is in an operation mode, such as a photographing mode or a video mode, the front camera and/or the rear camera can receive external multimedia datum. Each of the front camera and the rear camera may be a fixed optical lens system or have focus and optical zoom capability.

The audio component 810 is configured to output and/or input an audio signal. For example, the audio component 810 includes a microphone (MIC) configured to receive an external audio signal when the terminal 800 is in an operation mode, such as a call mode, a recording mode, and a voice recognition mode. The received audio signal may be further stored in the memory 804 or sent via the communication component 816. In some embodiments, the audio component 810 also includes a speaker for outputting the audio signal.

The I/O interface 812 provides an interface between the processing component 802 and peripheral interface modules, such as a keyboard, a click wheel, buttons, and the like. These buttons may include, but are not limited to, a home button, a volume button, a starting button, and a locking button.

The sensor component 814 includes one or more sensors for providing status assessments of various aspects of the terminal 800. For example, the sensor component 814 can detect an open/closed status of the terminal 800, relative positioning of components, such as the display and the keypad of the terminal 800. The sensor component 814 can also detect a change in position of one component of the terminal 800 or the terminal 800, the presence or absence of user contact with the terminal 800, an orientation, or an acceleration/deceleration of the terminal 800, and a change in temperature of the terminal 800. The sensor component 814 can include a proximity sensor configured to detect the presence of nearby objects without any physical contact. The sensor component 814 can also include a light sensor, such as a CMOS or CCD image sensor, configured to use in imaging applications. In some embodiments, the sensor component 814 can also include an accelerometer sensor, a gyroscope sensor, a magnetic sensor, a pressure sensor, or a temperature sensor.

The communication component 816 is configured to facilitate wired or wireless communication between the terminal 800 and other devices. The terminal 800 can access a wireless network based on a communication standard, such as WiFi, 2G or 3G, or a combination thereof. In an exemplary embodiment, the communication component 816 receives broadcast signals or broadcast associated information from an external broadcast management system via a broadcast channel. In an exemplary embodiment, the communication component 816 also includes a near field communication (NFC) module to facilitate short-range communications. For example, the NFC module can be implemented based on a radio frequency identification (RFID) technology, an infrared data association (IrDA) technology, an ultra-wideband (UWB) technology, a Bluetooth (BT) technology, and other technologies.

In an exemplary embodiment, the terminal 800 may be implemented with one or more application specific integrated circuits (ASICs), digital signal processors (DSPs), digital signal processing devices (DSPDs), programmable logic devices (PLDs), field programmable Gate array (FPGA), controller, microcontroller, microprocessor or other electronic components to perform the above described method.

In an exemplary embodiment, there is also provided a non-transitory computer-readable storage medium including instructions, such as a memory 804 including instructions executable by the processor 820 of the terminal 800 to perform the above described method. For example, the non-transitory computer readable storage medium may be a ROM, a random access memory (RAM), a CD-ROM, a magnetic tape, a floppy disc, and an optical data storage device.

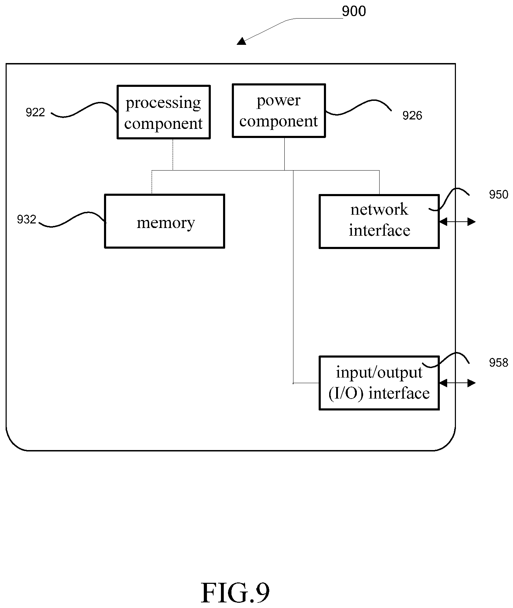

FIG. 9 is a schematic diagram of a base station. With reference to FIG. 9, the base station 900 includes a processing component 922 that further includes one or more processors, and a memory resource represented by a memory 932 for storing instructions, such as application programs, executable by the processing component 922. The application programs stored in memory 932 may include one or more modules, each of which corresponds to a set of instructions. Moreover, the processing component 922 is configured to execute instructions.

The base station 900 may also include a power component 926 configured to perform power management of the base station 900, a wired or wireless network interface 950 configured to connect the base station 900 to a network, and an input/output (I/O) interface 958. The base station 900 may operate based on an operating system stored in the memory 932, such as Windows Server^{™}, Mac OS X^{™}, Unix^{™}, Linux^{™}, FreeBSD^{™}, or the like.

Other embodiments of the present disclosure will be apparent to those skilled in the art from consideration of the specification and practice of the present disclosure disclosed herein. The present disclosure is intended to cover any variations, uses, or adaptations of the present disclosure, which are in accordance with the general principles of the present disclosure and include common general knowledge or conventional technical means in the art that are not disclosed in the present disclosure. The specification and embodiments are illustrative, and the real scope and spirit of the present disclosure is defined by the appended claims.

It should be understood that the present disclosure is not limited to the precise structures that have been described above and shown in the drawings, and various modifications and changes can be made without departing from the scope thereof. The scope of the present disclosure is limited only by the appended claims.

## Claims

1. A coexistence interference reporting method, comprising:
reporting, by a terminal, a time division multiplexing (TDM) pattern according to coexistence interference, wherein the TDM pattern is used to indicate a time domain resource that is available for a communication module imposing interference or subjected to the interference in the terminal, or the TDM pattern is used to indicate the time domain resource that is not available for the communication module imposing the interference or subjected to the interference in the terminal, or the TDM pattern is used to indicate a transmission direction of an orthogonal frequency division multiplexing (OFDM) symbol, and wherein the transmission direction comprises uplink transmission and/or downlink reception.

2. The method according to claim 1, wherein:
when the coexistence interference is that at least one of a long term evolution (LTE) frequency band and a new radio (NR) frequency band is interfered, a transmission direction of a corresponding slot is the uplink transmission;
or,
when the coexistence interference is that a WiFi frequency band, a Bluetooth frequency band or a global navigation satellite system frequency band is interfered, the transmission direction of the corresponding slot is the downlink reception;
or,
when the coexistence interference is that the at least one of the long term evolution (LTE) frequency band and the new radio (NR) frequency band is interfered, a transmission direction of a corresponding OFDM symbol is the uplink transmission;
or,
when the coexistence interference is that the WiFi frequency band, the Bluetooth frequency band or the global navigation satellite system frequency band is interfered, the transmission direction of the corresponding OFDM symbol is the downlink reception.

3. The method according to claim 1, wherein the TDM pattern comprises at least one of the following:
the TDM pattern is indicated with slot configuration information, wherein the slot configuration information is used to indicate an OFDM symbol for the uplink transmission and/or an OFDM symbol for the downlink reception, and/or to indicate a slot for the uplink transmission and/or a slot for the downlink reception;
or,
the TDM pattern is indicated with time division duplex (TDD) uplink-downlink configuration information.

4. The method according to claim 1, wherein:
the TDM pattern is indicated with a bitmap;
or,
when available time domain resources are consecutively distributed, the TDM pattern is indicated with a starting position and a length of the consecutively distributed time domain resources;
or,
when the available time domain resources are not consecutively distributed, the TDM pattern is indicated with a starting position and a length of consecutively distributed time domain sub-resources of discretely distributed time domain resources.

5. The method according to any one of claims 1 to 4, wherein the method further comprises:
indicating a reference subcarrier spacing of the OFDM symbol or a slot.

6. The method according to claim 5, wherein the indicating the reference subcarrier spacing of the OFDM symbol or the slot comprises:
indicating the reference subcarrier spacing of the OFDM symbol or the slot with a bit length occupied by the TDM pattern, wherein different bit lengths correspond to different reference subcarrier spacings.

7. The method according to claim 5, wherein the indicating the reference subcarrier spacing of the OFDM symbol or the slot comprises:
indicating an uplink reference subcarrier spacing and a downlink reference subcarrier spacing when frequency division multiplexing (FDD) is used.

8. The method according to claim 5, wherein the indicating the reference subcarrier spacing of the OFDM symbol or the slot comprises:
when there is a supplement uplink carrier, indicating a reference subcarrier spacing of the supplement uplink carrier and a reference subcarrier spacing of a non-supplement uplink carrier.

9. The method according to any one of claims 1 to 4, wherein:
TDM patterns of different cells are indicated separately;
or,
TDM patterns of different frequency points are indicated separately.

10. A coexistence interference reporting apparatus, comprising:
a reporting module, configured to report a time division multiplexing (TDM) pattern according to coexistence interference by a terminal, wherein the TDM pattern is used to indicate a time domain resource that is available for a communication module imposing interference or subj ected to the interference in the terminal, or the TDM pattern is used to indicate the time domain resource that is available for the communication module imposing the interference or subjected to the interference in the terminal, or the TDM pattern is used to indicate a transmission direction of an orthogonal frequency division multiplexing (OFDM) symbol, and wherein the transmission direction comprises uplink transmission and/or downlink reception.

11. The apparatus according to claim 10, wherein:
when the coexistence interference is that at least one of a long term evolution (LTE) frequency band and a new radio (NR) frequency band is interfered, a transmission direction of a corresponding slot is the uplink transmission;
or,
when the coexistence interference is that a WiFi frequency band, a Bluetooth frequency band or a global navigation satellite system frequency band is interfered, the transmission direction of the corresponding slot is the downlink reception;
or,
when the coexistence interference is that the at least one of the long term evolution (LTE) frequency band and the new radio (NR) frequency band is interfered, a transmission direction of a corresponding OFDM symbol is the uplink transmission;
or,
when the coexistence interference is that the WiFi frequency band, the Bluetooth frequency band or the global navigation satellite system frequency band is interfered, the transmission direction of the corresponding OFDM symbol is the downlink reception.

12. The apparatus according to claim 10, wherein the TDM pattern comprises at least one of the following:
the TDM pattern is indicated with slot configuration information, wherein the slot configuration information is used to indicate an OFDM symbol for the uplink transmission and/or an OFDM symbol for the downlink reception, and/or to indicate a slot for the uplink transmission and/or a slot for the downlink reception;
or,
the TDM pattern is indicated with time division duplex (TDD) uplink-downlink configuration information.

13. The apparatus according to claim 10, wherein:
the TDM pattern is indicated with a bitmap;
or,
when available time domain resources are consecutively distributed, the TDM pattern is indicated with a starting position and a length of the consecutively distributed time domain resources;
or,
when the available time domain resources are not consecutively distributed, the TDM pattern is indicated with a starting position and a length of consecutively distributed time domain sub-resources of discretely distributed time domain resources.

14. The apparatus according to any one of claims 10 to 13, wherein the apparatus further comprises:
an indicating module, configured to indicate a reference subcarrier spacing of the OFDM symbol or a slot.

15. The apparatus according to claim 14, wherein the indicating module is configured to indicate the reference subcarrier spacing of the OFDM symbol or the slot with a bit length occupied by the TDM pattern, wherein different bit lengths correspond to different reference subcarrier spacings.

16. The apparatus according to claim 14, wherein the indicating module is configured to indicate an uplink reference subcarrier spacing and a downlink reference subcarrier spacing when frequency division multiplexing (FDD) is used.

17. The apparatus according to claim 14, wherein the indicating module is configured to, when there is a supplement uplink carrier, indicate a reference subcarrier spacing of the supplement uplink carrier and a reference subcarrier spacing of a non-supplement uplink carrier.

18. The apparatus according to any one of claims 10 to 13, wherein:
TDM patterns of different cells are indicated separately;
or,
TDM patterns of different frequency points are indicated separately.

19. A communication device, comprising:
an antenna;
a memory; and
a processor, respectively connected to the antenna and the memory, and configured to control the antenna to send and receive a wireless signal and execute steps of the coexistence interference reporting method according to any one of claims 1 to 9 by executing an executable program stored in the memory.

20. A non-transitory computer-readable storage medium storing an executable program, wherein the executable program, when executed by a processor, implements steps of the coexistence interference reporting method according to any one of claims 1 to 9.
